# EUROPEAN PATENT APPLICATION

(11) **EP 3 978 540 A1**
(43) Date of publication of application: **06.04.2022**
(21) Application number: 20815487.2
(22) Date of filing: 30.01.2020
(51) Int. Cl.: C08F 8/48, C08K 5/49, C08L 33/04, C08L 35/00

(54) **POLYMER COMPOSITION, MOLDED BODY, OPTICAL MEMBER AND METHOD FOR PRODUCING POLYMER COMPOSITION**

(30) Priority: 31.05.2019 JP 2019102642
(71) Applicant: Sumitomo Chemical Company, Ltd., Chuo-ku Tokyo 104-8260 (JP)
(72) Inventor: OKAZAKI, Ryosuke, Niihama-shi, Ehime 792-8521 (JP); MANABE, Makoto, Niihama-shi, Ehime 792-8521 (JP)
(74) Representative: Winter, Brandl - Partnerschaft mbB
(86) International application number: PCT/JP2020/003394
(87) International publication number: WO 2020/240924

(57) **Abstract**

Provided is a polymer composition having sufficient heat resistance and optical characteristics. Disclosed is a polymer composition comprising a polymer containing a monomer unit having a ring structure, wherein the polymer composition is, for instance, polymer composition A containing a polymer of a monomer having a ring structure, and when a flat plate of 120 mm × 100 mm × 3.0 mm in thickness is molded from the polymer composition under the following injection molding conditions of: (1) using a non-vent-type injection molding machine; (2) using a cold runner mold; (3) having a cylinder temperature of 260°C; and (4) having a ratio of an injection volume of the injection molding machine to a molded product volume of 4.5, a difference between a monomer content in the flat plate obtained at a cooling time of 5 min and a monomer content in the flat plate obtained at a cooling time of 1 min is 1000 ppm by mass or more and 12000 ppm by mass or less.

## Description

### TECHNICAL FIELD

The present invention relates to a polymer composition, a molded body comprising the polymer composition, an optical member including the molded body, and a method for producing the polymer composition.

### BACKGROUND ART

Polymers such as polymethyl methacrylate, polystyrene, and a methyl methacrylate-styrene copolymer have, for instance, excellent transparency, mechanical properties, and molding processability and have thus been used in a wide range of fields of vehicle members, electrical members, industrial material members, and so on.

Such polymers and molded bodies may be required to have better characteristics in terms of, for instance, optical characteristics such as transparency, molding processability, heat resistance, weather resistance, and strength depending on the applicable fields. For example, in the field of vehicle members and the like, the above-described polymers are used as raw materials for optical members such as optical lenses of lamps. In the future, since it is projected that an LED lamp with higher luminance is used as a light source of the lamps, the polymers should have sufficient heat resistance and optical characteristics. Thus, the heat resistance and optical characteristics of the polymers have been tried to be improved in various manners.

For example, Patent Document 1 discloses, as an acrylic resin having improved heat resistance and high colorless transparency, an acrylic resin having a content of acid anhydride unit having a 6-membered ring structure of 0.01 to 10 parts by mass and a specific weight-average molecular weight.

Patent Document 2 discloses a copolymer containing 80 mol% or more of methyl (meth) acrylate unit as a copolymer having, for instance, excellent heat resistance and appearance.

Patent Document 3 discloses, as a thermoplastic resin composition having excellent heat resistance, appearance, weather resistance, and the like, a thermoplastic resin composition containing a copolymer and an antioxidant and containing 0.001 mol% or more and 0.15 mol% or less of repeating unit having a glutaric anhydride structure.

### PRIOR ART DOCUMENTS

### PATENT DOCUMENTS

Patent Document 1: JP-A-2009-256406
Patent Document 2: WO 2017/022393
Patent Document 3: WO 2019/013186

### SUMMARY OF THE INVENTION

### PROBLEMS TO BE SOLVED BY THE INVENTION

However, in the acrylic resin disclosed in Patent Document 1 and the copolymer disclosed in Patent Document 2, the method is restricted such that the amount of monomer unit in the resin or the polymer is set within a specific range. When the polymer obtained by this method is used as the optical member, the heat resistance and the optical characteristics have been insufficient.

The thermoplastic resin composition disclosed in Patent Document 3 has improved coloring by blending an antioxidant. However, the content of repeating unit having a glutaric anhydride structure is small. Thus, the heat resistance has not necessarily been sufficient.

Hence, the purpose of the present invention is to provide a polymer composition having sufficient heat resistance and optical characteristics, a molded body comprising the polymer composition, an optical member including the molded body, and a method for producing the polymer composition.

### MEANS FOR SOLVING THE PROBLEMS

The present inventors have conducted intensive research to solve the above problems. As a result, the invention has been completed. Specifically, the invention encompasses the following preferable items.
[1] A polymer composition comprising a polymer containing a monomer unit having a ring structure,
   wherein the polymer composition is polymer composition A containing a polymer of a monomer having a ring structure, or a polymer composition as a cyclized product of polymer composition B containing a precursor polymer, namely a polymer of two or more different monomers that are capable of together forming a ring, and
   when a flat plate of 120 mm × 100 mm × 3.0 mm in thickness is molded from the polymer composition under the following injection molding conditions of:
      (1) using a non-vent-type injection molding machine;
      (2) using a cold runner mold;
      (3) having a cylinder temperature of 260°C; and
      (4) having a ratio of an injection volume of the injection molding machine to a molded product volume of 4.5,
   a difference between a monomer content in the flat plate obtained at a cooling time of 5 min and a monomer content in the flat plate obtained at a cooling time of 1 min is 1000 ppm by mass or more and 12000 ppm by mass or less.
[2] The polymer composition according to [1], wherein the monomer unit having a ring structure comprises at least one unit selected from the group consisting of glutaric anhydride structural units, maleic anhydride structural units, maleimide structural units, glutarimide structural units, and lactone structural units.
[3] The polymer composition according to [2], wherein the monomer unit having a ring structure comprises a glutaric anhydride structural unit.
[4] The polymer composition according to any one of [1] to [3], further comprising a phosphorus-based antioxidant having a content of 0.005 parts by mass or more and 0.2 parts by mass or less based on 100 parts by mass of the polymer.
[5] The polymer composition according to any one of [1] to [4], wherein the polymer comprises, as a monomer unit other than the monomer unit having a ring structure, at least one unit selected from the group consisting of methacrylic acid-derived monomer units, methacrylate-derived monomer units, acrylic acid-derived monomer units, and acrylate-derived monomer units.
[6] The polymer composition according to any one of [1] to [5], wherein the polymer comprises the monomer unit having a ring structure in an amount of more than 0.15 mol% and 5 mol% or less based on all monomer units included in the polymer.
[7] A molded body comprising the polymer composition according to any one of [1] to [6].
[8] An optical member comprising the molded body according to [7].
[9] A method for producing the polymer composition including a polymer containing a monomer unit having a ring structure according to any one of [1] to [6], the method comprising the step of:
   producing the polymer composition by extruding, using an extruder at a cylinder temperature of 240°C or higher and 270°C or lower, polymer composition A containing a polymer of a monomer having a ring structure, or polymer composition B containing a precursor polymer, namely a polymer of two or more different monomers that are capable of together forming a ring.
[10] The method according to [9], wherein the extrusion results in a cyclized product of the polymer composition B containing a precursor polymer, namely a polymer of two or more different monomers that are capable of together forming a ring.

### EFFECT OF THE INVENTION

The invention makes it possible to provide a polymer composition having sufficient heat resistance and optical characteristics, a molded body comprising the polymer composition, an optical member including the molded body, and a method for producing the polymer composition.

### BRIEF DESCRIPTION OF THE DRAWINGS

Fig. 1 is a view showing a non-vent-type injection molding machine for molding a polymer composition of the invention.
Fig. 2 is a view showing a test molded piece prepared from the polymer composition of the invention by injection molding.

### MODE FOR CARRYING OUT THE INVENTION

Hereinafter, embodiments of the invention will be described in detail. The scope of the invention is not limited to the embodiments described herein, and various modifications may be made without departing from the spirit of the invention.

### <Polymer Composition>

A polymer composition of the invention comprises a polymer containing a monomer unit having a ring structure. The polymer composition is polymer composition A containing a polymer of a monomer having a ring structure, or a polymer composition as a cyclized product of polymer composition B containing a precursor polymer, namely a polymer of two or more different monomers that are capable of together forming a ring.

As used herein, examples of the monomer unit having a ring structure include a monomer unit containing a ring structure derived from a monomer having a ring structure, and a monomer unit containing a ring structure formed by, for instance, a condensation reaction of two or more different monomers that are capable of together forming a ring. As the monomer unit having a ring structure, one or both of them may be included in the polymer.

As used herein, the "two or more different monomers that are capable of together forming a ring" refers to any two or more kinds of monomers used such that any one kind of monomer unit reacts (e.g., a condensation reaction) with any of other one kind of monomer unit to form a ring structure in a polymer as so formed by polymerizing the two or more different monomers to give a monomer unit having a ring structure.

As used herein, the term "(meth)acrylic" means "acrylic" or "methacrylic".

Hereinafter, the polymer and another component(s) included in the polymer composition of the invention will be described in detail.

### (A) Polymer

### (a) Monomer Unit Having Ring Structure

The monomer unit having a ring structure (hereinafter, also referred to as a ring-structured monomer unit) is not particularly limited. Preferably, the ring-structured monomer unit is a 6-membered ring-structured monomer unit or a 5-membered ring-structured monomer unit.

The ring-structured monomer unit includes, for example, at least one unit selected from the group consisting of glutaric anhydride structural units, maleic anhydride structural units, maleimide structural units, glutarimide structural units, and lactone structural units. The ring-structured monomer unit preferably contains a glutaric anhydride structural unit. Hereinafter, specific examples of each ring-structured monomer unit will be described.

### • Glutaric Anhydride Structural Unit (a-1)

The glutaric anhydride structural unit is represented by the following formula (1). 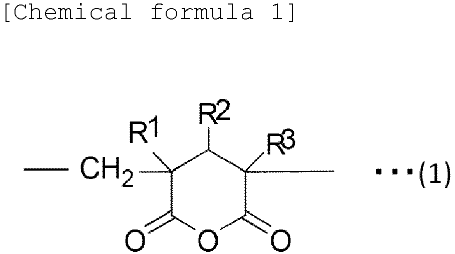 wherein R¹, R², and R³ each independently represent a hydrogen atom or a substituted or unsubstituted C₁₋₂₀ alkyl group, preferably a substituted or unsubstituted C₁₋₁₂ alkyl group, more preferably a substituted or unsubstituted C₁₋₈ alkyl group, and still more preferably a substituted or unsubstituted C₁₋₆ alkyl group, and
the alkyl group is optionally substituted with a hydroxy group.

The glutaric anhydride structural unit (a-1) may be formed, for example, by using, as raw material monomers, acrylate and acrylic acid or methacrylate and methacrylic acid and causing a cyclization reaction in a polymer obtained by polymerizing them. If the glutaric anhydride structural unit (a-1) is included in the polymer, a molded body comprsing the polymer composition, in particular, can have improved heat resistance.

### • Maleic Anhydride Structural Unit (a-2)

The maleic anhydride structural unit is represented by the following formula (2). 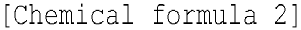 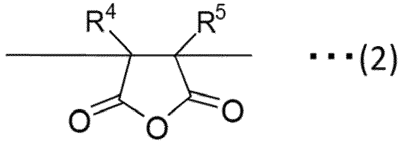 wherein R⁴ and R⁵ each independently represent a hydrogen atom, a halogen atom, a substituted or unsubstituted C₆₋₂₀ aryl group, or a substituted or unsubstituted C₁₋₂₀ alkyl group, preferably a substituted or unsubstituted C₁₋₁₂ alkyl group, more preferably a substituted or unsubstituted C₁₋₈ alkyl group, and still more preferably a substituted or unsubstituted C₁₋₆ alkyl group, and
the alkyl group or the aryl group is optionally substituted with a hydroxy group.

The maleic anhydride structural unit (a-2) is included in a polymer copolymerized using a substituted or unsubstituted maleic anhydride as a raw material monomer. Examples of the substituted or unsubstituted maleic anhydride include maleic anhydride, citraconic anhydride, dimethyl maleic anhydride, dichloro maleic anhydride, bromo maleic anhydride, dibromo maleic anhydride, phenyl maleic anhydride, or diphenyl maleic anhydride. Among these substituted or unsubstituted maleic anhydrides, maleic anhydride is preferably used because copolymerization for producing a polymer is easy.

### • Maleimide Structural Unit (a-3)

The maleimide structural unit is represented by the following formula (3). 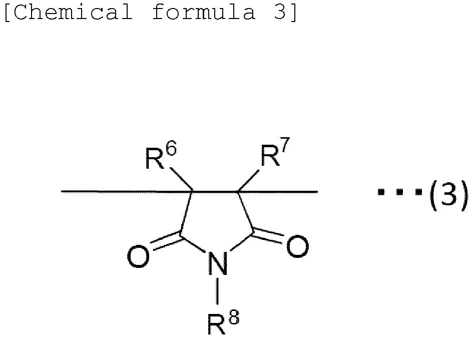 wherein R⁶ and R⁷ each independently represent a hydrogen atom or a substituted or unsubstituted C₁₋₂₀ alkyl group, preferably a substituted or unsubstituted C₁₋₁₂ alkyl group, more preferably a substituted or unsubstituted C₁₋₈ alkyl group, and still more preferably a substituted or unsubstituted C₁₋₆ alkyl group,
R⁸ represents a hydrogen atom or any group selected from the group consisting of substituted or unsubstituted C₁₋₁₂ alkyl groups, substituted or unsubstituted C₁₋₁₂ alkoxy groups, substituted or unsubstituted C₆₋₁₈ aryl groups, and substituted or unsubstituted C₆₋₁₈ aryloxy groups where
the alkyl group, alkoxy group, aryl group, or aryloxy group is optionally substituted with a hydroxy group.

Preferably, the above formula (3) is as follows:
wherein R⁶ and R⁷ each independently represent a hydrogen atom or a substituted or unsubstituted C₁₋₆ alkyl group,
R⁸ represents a hydrogen atom or any group selected from the group consisting of substituted or unsubstituted C₁₋₆ alkyl groups, substituted or unsubstituted C₁₋₆ alkoxy groups, substituted or unsubstituted C₆₋₁₂ aryl groups, and substituted or unsubstituted C₆₋₁₂ aryloxy groups, where
the alkyl group, alkoxy group, aryl group, or aryloxy group is optionally substituted with a hydroxy group.

For example, a specific monomer may be used to include the maleimide structural unit (a-3) in the polymer. Such a raw material monomer is not particularly limited. Examples thereof include an N-aryl group-substituted maleimide such as maleimide, N-methylmaleimide, N-ethylmaleimide, N-cyclohexylmaleimide, N-phenylmaleimide, N-methylphenylmaleimide, N-ethylphenylmaleimide, N-butylphenylmaleimide, N-dimethylphenylmaleimide, N-hydroxyphenylmaleimide, N-methoxyphenylmaleimide, N-(o-chlorophenyl)maleimide, N-(m-chlorophenyl)maleimide, or N-(p-chlorophenyl)maleimide.

### • Glutarimide Structural Unit (a-4)

The glutarimide structural unit is represented by the following formula (4). 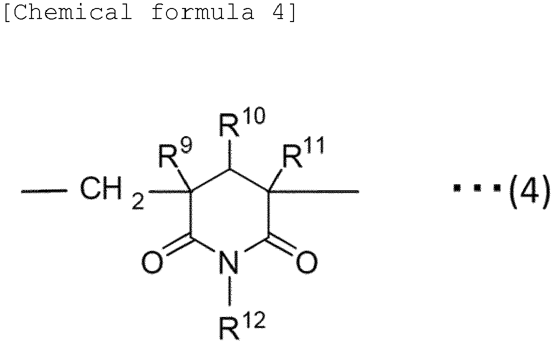 wherein R⁹, R¹⁰, and R¹¹ each independently represent a hydrogen atom or a substituted or unsubstituted C₁₋₂₀ alkyl group, preferably a substituted or unsubstituted C₁₋₁₂ alkyl group, more preferably a substituted or unsubstituted C₁₋₈ alkyl group, and still more preferably a substituted or unsubstituted C₁₋₆ alkyl group,
R¹² represents a hydrogen atom or any group selected from the group consisting of substituted or unsubstituted C₁₋₁₂ alkyl groups, substituted or unsubstituted C₁₋₁₂ alkoxy groups, substituted or unsubstituted C₆₋₁₈ aryl groups, and substituted or unsubstituted C₆₋₁₈ aryloxy groups where
the alkyl group, alkoxy group, aryl group, or aryloxy group is optionally substituted with a hydroxy group.

Preferably, the above formula (4) is as follows:
wherein R⁹, R¹⁰, and R¹¹ each independently represent a hydrogen atom or a substituted or unsubstituted C₁₋₆ alkyl group,
R¹² represents a hydrogen atom or any group selected from the group consisting of substituted or unsubstituted C₁₋₆ alkyl groups, substituted or unsubstituted C₁₋₆ alkoxy groups, substituted or unsubstituted C₆₋₁₂ aryl groups, and substituted or unsubstituted C₆₋₁₂ aryloxy groups, where
the alkyl group, alkoxy group, aryl group, or aryloxy group is optionally substituted with a hydroxy group.

The glutarimide structural unit (a-4) may be included in the polymer by, for example, a method of copolymerizing, as raw material monomers, methacrylate and/or methacrylic acid and reacting with ammonia, amine, or urea at a high temperature. Alternatively, it is also possible to use a known method such as a method of reacting polymethacrylic anhydride with ammonia or amine.

### • Lactone Structural Unit (a-5)

The lactone structural unit is represented by the following formula (5). 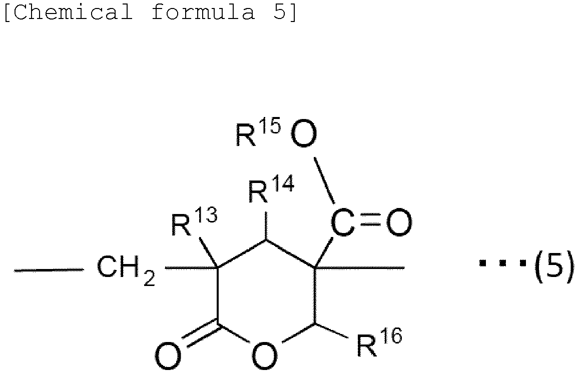 wherein R¹³, R¹⁴, and R¹⁵ each independently represent a hydrogen atom or a substituted or unsubstituted C₁₋₂₀ alkyl group, preferably a substituted or unsubstituted C₁₋₁₂ alkyl group, more preferably a substituted or unsubstituted C₁₋₈ alkyl group, and still more preferably a substituted or unsubstituted C₁₋₆ alkyl group,
R¹⁶ represents a hydrogen atom or any group selected from the group consisting of substituted or unsubstituted C₁₋₁₂ alkyl groups, substituted or unsubstituted C₁₋₁₂ alkoxy groups, substituted or unsubstituted C₆₋₁₈ aryl groups, and substituted or unsubstituted C₆₋₁₈ aryloxy groups where
the alkyl group, alkoxy group, aryl group, or aryloxy group is optionally substituted with a hydroxy group.

Preferably, the above formula (5) is as follows:
wherein R¹³, R¹⁴, and R¹⁵ each independently represent a hydrogen atom or a substituted or unsubstituted C₁₋₆ alkyl group,
R¹⁶ represents a hydrogen atom or any group selected from the group consisting of substituted or unsubstituted C₁₋₆ alkyl groups, substituted or unsubstituted C₁₋₆ alkoxy groups, substituted or unsubstituted C₆₋₁₂ aryl groups, and substituted or unsubstituted C₆₋₁₂ aryloxy groups, where
the alkyl group, alkoxy group, aryl group, or aryloxy group is optionally substituted with a hydroxy group.

The method of introducing the lactone structural unit (a-5) into the polymer is not particularly limited. The lactone structure may be formed, for example, by copolymerizing acrylic acid or acrylate having a hydroxy group as a substituent and methacrylate such as methyl methacrylate as raw material monomers, further introducing a hydroxy group and an ester group or carboxyl group into the molecular chain, and causing dealcoholization or dehydration condensation between the hydroxy group and the ester group or carboxyl group.

Examples of the acrylic acid or acrylate having a hydroxy group as used for polymerization include 2-(hydroxymethyl)acrylic acid, 2-(hydroxyethyl) acrylic acid, alkyl 2-(hydroxymethyl)acrylate, or alkyl 2-(hydroxyethyl)acrylate. Preferred is 2-(hydroxymethyl)acrylate or alkyl 2-(hydroxymethyl)acrylate having a hydroxyallyl moiety. Examples of the alkyl 2-(hydroxymethyl)acrylate include methyl 2-(hydroxymethyl)acrylate, ethyl 2-(hydroxymethyl)acrylate, isopropyl 2-(hydroxymethyl)acrylate, n-butyl 2-(hydroxymethyl)acrylate, or t-butyl 2-(hydroxymethyl)acrylate. Among them, methyl 2-(hydroxymethyl)acrylate or ethyl 2-(hydroxymethyl) acrylate is particularly preferable.

The proportion of the ring-structured monomer unit included in the polymer, based on all the monomer units contained as components in the polymer included in a polymer composition of the invention, is preferably more than 0.15 mol% and 5 mol% or less, more preferably 0.2 mol% or more and 4.5 mol% or less, still more preferably 0.26 mol% or more and 4 mol% or less, still more preferably 0.3 mol% or more and 3 mol% or less, and still more preferably 0.6 mol% or more and 1 mol% or less.

The proportion (mol%) of the ring-structured monomer unit in the polymer included in the polymer composition of the invention is calculated by integrating peaks in a peak range corresponding to various ring-structured monomer units assigned by a ¹³C-NMR method. Alternatively, a ¹³C-NMR method and a ¹H-NMR method and/or an IR method may also be used depending on the ring structure(s) contained.

### (b) Monomer Unit Other Than Monomer Unit Having Ring Structure

The polymer included in the polymer composition of the invention may contain a monomer unit (hereinafter, also referred to as a non-ring-structured monomer unit) other than the monomer unit having a ring structure.

The non-ring-structured monomer unit is derived from a raw material monomer of the polymer contained in the polymer composition. The monomer is not particularly limited as long as the monomer is a polymerizable vinyl-based monomer. The non-ring-structured monomer unit also includes a monomer unit in which each monomer that are capable of together forming a ring does not form any ring structure as described above and is present as a non-ring-structured monomer unit in the polymer as it is.

For instance, the non-ring-structured monomer unit may include at least one unit selected from the group consisting of methacrylic acid-derived monomer units (the following formula (6)), methacrylate-derived monomer units (the following formula (7)), acrylic acid-derived monomer units (the following formula (8)), acrylate-derived monomer units (the following formula (9)), and aromatic vinyl-derived monomer units (the following formula (10)). The non-ring-structured monomer unit preferably includes at least one unit selected from the group consisting of methacrylic acid-derived monomer units, methacrylate-derived monomer units, acrylic acid-derived monomer units, and acrylate-derived monomer units. 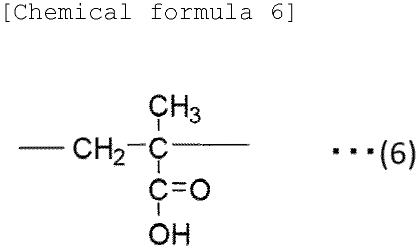 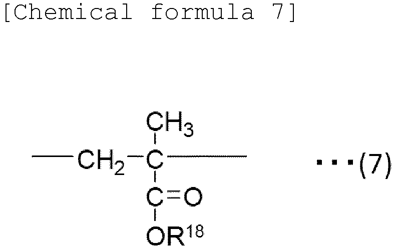 wherein R¹⁸ represents a substituted or unsubstituted C₁₋₂₀ alkyl group, preferably a substituted or unsubstituted C₁₋₁₂ alkyl group, more preferably a substituted or unsubstituted C₁₋₈ alkyl group, and still more preferably a substituted or unsubstituted C₁₋₆ alkyl group, and
the alkyl group is optionally substituted with a hydroxy group. 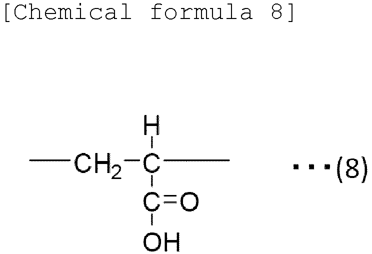 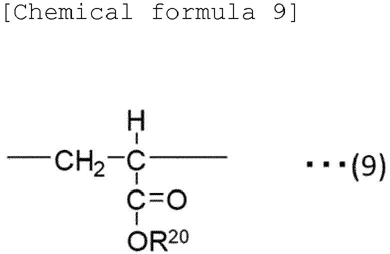 wherein R²⁰ represents a substituted or unsubstituted C₁₋₂₀ alkyl group, preferably a substituted or unsubstituted C₁₋₁₂ alkyl group, more preferably a substituted or unsubstituted C₁₋₈ alkyl group, and still more preferably a substituted or unsubstituted C₁₋₆ alkyl group, and
the alkyl group is optionally substituted with a hydroxy group. 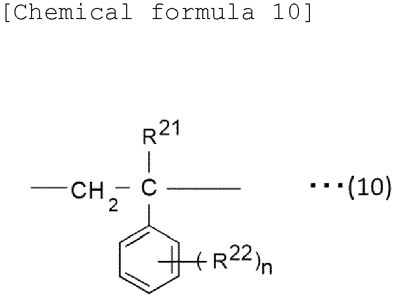 wherein R²¹ represents a hydrogen atom or a substituted or unsubstituted C₁₋₂₀ alkyl group, preferably a substituted or unsubstituted C₁₋₁₂ alkyl group, more preferably a substituted or unsubstituted C₁₋₈ alkyl group, and still more preferably a substituted or unsubstituted C₁₋₆ alkyl group,
n represents an integer of 0 to 5, and
R²² represents a hydrogen atom or any group selected from the group consisting of substituted or unsubstituted C₁₋₁₂ alkyl groups, substituted or unsubstituted C₁₋₁₂ alkoxy groups, substituted or unsubstituted C₆₋₁₈ aryl groups, and substituted or unsubstituted C₆₋₁₈ aryloxy groups where
all R²² groups may be the same or different,
R²² groups may together form a ring structure, and
the alkyl group, alkoxy group, aryl group, or aryloxy group is optionally substituted with a hydroxy group.

If the polymer contained in the polymer composition of the invention includes the non-ring-structured monomer unit, the raw material monomer may contain two or more compounds selected from the group consisting of methacrylic acids, methacrylates (the following formula (11)), acrylic acids, acrylates (the following formula (12)), and aromatic vinyls (the following formula (13)). The raw material monomer may be a single kind or a plurality of kinds. The raw material monomer preferably contains two or more compounds selected from the group consisting of methacrylic acids, methacrylates, acrylic acids, and acrylates, and more preferably contains methacrylic acid and methacrylate. 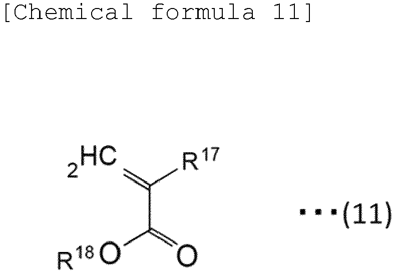 wherein R¹⁷ represents a methyl group,
R¹⁸ represents a substituted or unsubstituted C₁₋₂₀ alkyl group, preferably a substituted or unsubstituted C₁₋₁₂ alkyl group, more preferably a substituted or unsubstituted C₁₋₈ alkyl group, and still more preferably a substituted or unsubstituted C₁₋₆ alkyl group, and
the alkyl group is optionally substituted with a hydroxy group.

Examples of the methacrylate represented by the formula (11) include, but are not limited to, methyl methacrylate, ethyl methacrylate, butyl methacrylate, propyl methacrylate, isopropyl methacrylate, cyclohexyl methacrylate, phenyl methacrylate, (2-ethylhexyl)methacrylate, (t-butylcyclohexyl)methacrylate, benzyl methacrylate, or (2,2,2-trifluoroethyl)methacrylate. Only one kind of the methacrylate may be used singly, or two or more kinds thereof may be used in combination. 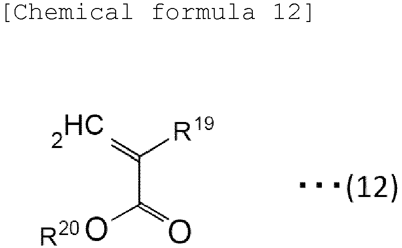 wherein R¹⁹ represents a hydrogen atom,
R²⁰ represents a substituted or unsubstituted C₁₋₂₀ alkyl group, preferably a substituted or unsubstituted C₁₋₁₂ alkyl group, more preferably a substituted or unsubstituted C₁₋₈ alkyl group, and still more preferably a substituted or unsubstituted C₁₋₆ alkyl group, and
the alkyl group is optionally substituted with a hydroxy group.

Examples of the acrylate represented by the formula (12) include, but are not limited to, methyl acrylate, ethyl acrylate, n-propyl acrylate, n-butyl acrylate, sec-butyl acrylate, 2-ethylhexyl acrylate, cyclohexyl acrylate, or phenyl acrylate. Only one kind of the acrylate may be used singly, or two or more kinds thereof may be used in combination. 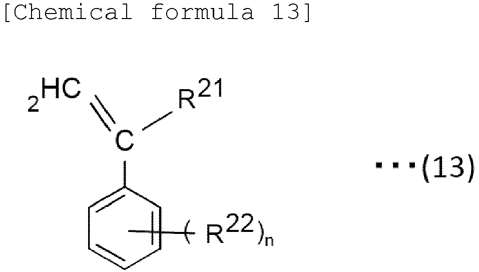 wherein R²¹ represents a hydrogen atom or a substituted or unsubstituted C₁₋₂₀ alkyl group, preferably a substituted or unsubstituted C₁₋₁₂ alkyl group, more preferably a substituted or unsubstituted C₁₋₈ alkyl group, and still more preferably a substituted or unsubstituted C₁₋₆ alkyl group,
n represents an integer of 0 to 5, and
R²² represents a hydrogen atom or any group selected from the group consisting of substituted or unsubstituted C₁₋₁₂ alkyl groups, substituted or unsubstituted C₁₋₁₂ alkoxy groups, substituted or unsubstituted C₆₋₁₈ aryl groups, and substituted or unsubstituted C₆₋₁₈ aryloxy groups where
all R²² groups may be the same or different,
R²² groups may together form a ring structure, and
the alkyl group, alkoxy group, aryl group, or aryloxy group is optionally substituted with a hydroxy group.

Examples of the aromatic vinyl represented by the formula (13) include, but are not limited to, styrene, o-methylstyrene, m-methylstyrene, p-methylstyrene, 2,4-dimethylstyrene, 2,5-dimethylstyrene, 3,4-dimethylstyrene, 3,5-dimethylstyrene, p-ethylstyrene, m-ethylstyrene, o-ethylstyrene, p-tert-butylstyrene, 1-vinylnaphthalene, 2-vinylnaphthalene, 1,1-diphenylethylene, isopropenylbenzene (a-methylstyrene), isopropenyltoluene, isopropenylethylbenzene, isopropenylpropylbenzene, isopropenylbutylbenzene, isopropenylpentylbenzene, isopropenylhexylbenzene, or isopropenyloctylbenzene. Only one kind of the aromatic vinyl may be used singly, or two or more kinds thereof may be used in combination.

Although not particularly limited, the polymer contained in the polymer composition of the invention as obtained from the monomer(s) as described above contains, as part of the polymer, for example, a structural unit having a ring-structured monomer unit as described below. Note that in the formulas, n represents an integer.

For instance, methyl methacrylate, methacrylic acid, and styrene may be used as raw material monomers to form the following structural unit (the following formula (14)) having a glutaric anhydride structural unit (a-1).

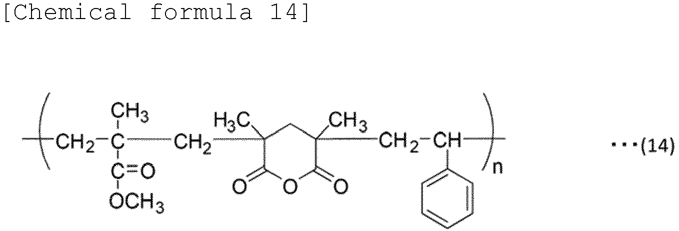

For instance, methyl methacrylate and methacrylic acid may be used as raw material monomers to form the following structural unit (the following formula (15)) having a glutaric anhydride structural unit (a-1).

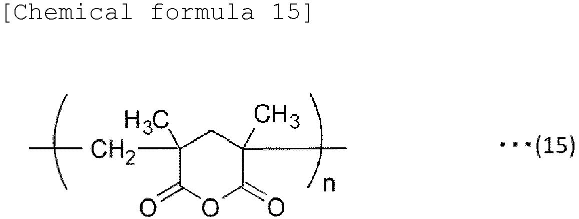

For instance, methyl methacrylate, maleic anhydride, styrene, and α-methylstyrene may be used as raw material monomers to form the following structural unit (the following formula (16)) having a maleic anhydride structural unit (a-2).

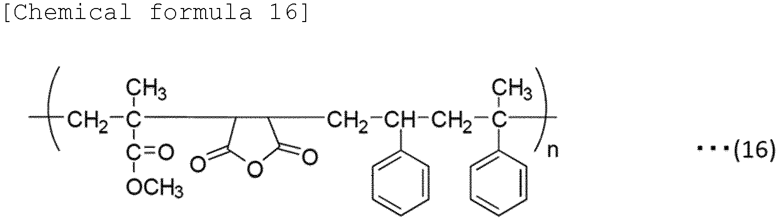

For instance, methyl methacrylate, N-cyclohexylmaleimide, and styrene may be used as raw material monomers to form the following structural unit (the following formula (17)) having a maleimide structural unit (a-3).

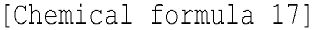

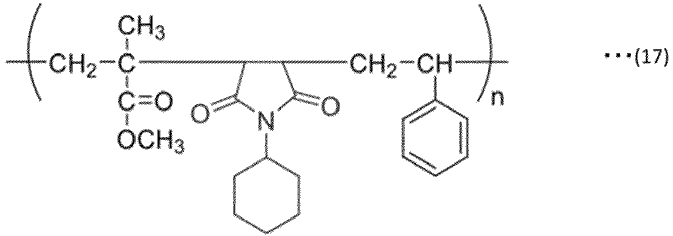

For instance, methyl methacrylate, methyl methacrylate, and 2-(hydroxymethyl)methyl acrylate may be used as raw material monomers to form the following structural unit (the following formula (18)) having a lactone structural unit (a-5).

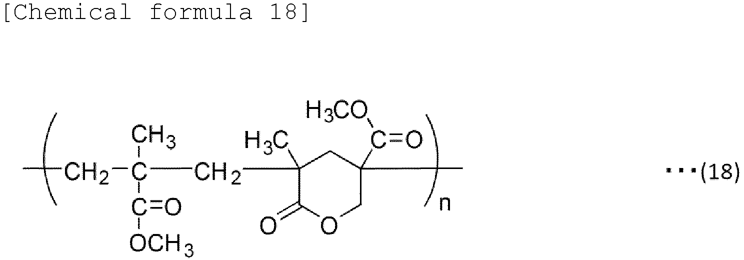

The ratio of the non-ring-structured monomer unit to all the monomers included in the polymer is a value (mol%) obtained by subtracting mol% of the above-mentioned ring-structured monomer unit contained in the polymer from 100 mol%.

One case will be described where (meth)acrylic acid and (meth)acrylate are used as part or all of raw material monomers. In such a case, the precursor polymer may comprise a monomer unit derived from (meth)acrylic acid and a monomer unit derived from (meth)acrylate. Further, the polymer after a cyclocondensation reaction by, for instance, extrusion may contain a monomer unit derived from (meth)acrylic acid, a monomer unit derived from (meth)acrylate, and a glutaric anhydride structural unit obtained by cyclocondensation of (meth)acrylic acid and (meth)acrylate.

In such a polymer, based on all the monomers included in the polymer, the content of the monomer unit derived from (meth)acrylate is preferably 80 mol% or more and 98.99 mol% or less, more preferably 90 mol% or more and 95 mol% or less, and particularly preferably 92.8 mol% or more and 94.2 mol% or less; the content of the monomer unit derived from (meth)acrylic acid is preferably 0.5 mol% or more and 12.8 mol% or less, more preferably 1 mol% or more and 10 mol% or less, still more preferably 1.5 mol% or more and 6.5 mol% or less, and still more preferably 5.2 mol% or more and 6.2 mol% or less; and the content of the glutaric anhydride structural unit is preferably more than 0.15 mol% and 5 mol% or less, more preferably 0.2 mol% or more and 4.5 mol% or less, still more preferably 0.26 mol% or more and 4 mol% or less, still more preferably 0.3 mol% or more and 3 mol% or less, and still more preferably 0.6 mol% or more and 1 mol% or less. Note that the (meth)acrylate is preferably methyl (meth)acrylate.

### (B) Phosphorus-Based Antioxidant

The polymer composition of the invention may comprise a phosphorus-based antioxidant. Examples of the phosphorus-based antioxidant include: phosphorus acid monoester, diester, or triester (e.g., phenyl phosphite, diphenyl phosphite, triphenyl phosphite); tris(2,4-di-tert-butylphenyl)phosphite;2-[[2,4,8,10-tetrakis(1,1-dimethylethyl)dibenzo[d,f][1,3,2]dioxaphosphepin-6-yl]oxy]-N,N-bis[2-[[2,4,8,10-tetrakis(1,1-dimethylethyl)dibenzo[d,f][1,3,2]dioxaphosphepin-6-yl]oxy]-ethyl]ethanamine; diphenyltridecylphosphite; triphenylphosphite; 2,2-methylenebis(4,6-di-tert-butylphenyl)octylphosphite; bis(2,6-di-tert-butyl-4-methylphenyl)pentaerythritol diphosphite; distearyl pentaerythritol diphosphite; cyclic neopentane tetraylbis(2,6-di-tert-butyl-4-methylphenyl)phosphite; tetrakis(2,4-di-*tert*-butylphenyl)4,4'-biphenylene diphosphonite; or tetrakis(2,4-di-tert-butyl-5-methylphenyl)4,4'-biphenylene diphosphite. Commercially available phosphorus-based antioxidants may be used. Examples include: Irgafos 168 (tris(2,4-di-tert-butylphenyl)phosphite, manufactured by BASF Japan Ltd.); Sumilizer GP ((6-[3-(3-*tert*-butyl-4-hydroxy-5-methylphenyl)propoxy]-2,4,8,10-tetra-tert-butyl dibenz[d,f][1,3,2]dioxaphosphepine, manufactured by Sumitomo Chemical Co., Ltd.); JPP100 (tetraphenyl dipropyleneglycol diphosphite, manufactured by JOHOKU CHEMICAL CO., LTD.); JPH3800 (hydrogenated bisphenol A-pentaerythritol phosphite polymer, manufactured by JOHOKU CHEMICAL CO., LTD.); Irgafos 12 (tris[2-[[2,4,8,10-tetra-tert-butyldibenzo[d,f][1,3,2]dioxaphosphepin-6-yl]oxy]ethyl]amine, manufactured by BASF Japan Ltd.); Irgafos 38 ((2,4-di-tert-butyl-6-methylphenyl)ethylbis phosphite, manufactured by BASF Japan Ltd.); ADEKA STAB HP-10 (2,2'-methylenebis(4,6-di-*tert-*butylphenyl)octylphosphite, manufactured by ADEKA Corporation); ADEKA STAB PEP36 (bis(2,6-di-tert-butyl-4-methylphenyl)pentaerythritol diphosphite, manufactured by ADEKA Corporation); ADEKA STAB PEP36A (bis(2,6-di-tert-butyl-4-methylphenyl)pentaerythritol diphosphite, manufactured by ADEKA Corporation); ADEKA STAB PEP-8 (cyclic neopentane tetraylbis(2,4-di-tert-butylphenylphosphite, manufactured by ADEKA Corporation); Hostanox P-EPQ (PEPQ: tetrakis(2,4-di-tert-butylphenyl)4,4'-biphenylene diphosphonite, manufactured by Clariant Co. Ltd); or GSY-P101 (tetrakis(2,4-di-tert-butyl-5-methylphenyl)4,4'-biphenylene diphosphonite, manufactured by Sakai Chemical Industry Co., Ltd.). The polymer composition of the invention may contain the phosphorus-based antioxidant in a proportion of preferably 0.2 parts by mass or less, more preferably 0.15 parts by mass or less, still more preferably 0.10 parts by mass or less, still more preferably 0.09 parts by mass or less, and particularly preferably 0.08 parts by mass or less based on 100 parts by mass of the polymer included in the invention. The lower limit of the phosphorus-based antioxidant is not particularly limited, and is, for example, 0.005 parts by mass or larger, preferably 0.01 parts by mass or larger, and more preferably 0.05 parts by mass or larger.

### (C) Additional Components

The polymer composition of the invention optionally comprises, for example, an additional antioxidant(s), a light stabilizer(s), a lubricant(s), a bluing agent(s), and/or a flame retardant(s) in addition to the polymer and the phosphorus-based antioxidant. A corresponding coloring preventing effect, weather resistance effect, mold releasing effect, and/or yellow value reducing effect can be imparted to a molded body comprising the polymer composition of the invention. It is also possible to include trace components (residues of additives such as a polymerization initiator, a polymerization stabilizer, and/or a molecular weight modifier) that are inevitably mixed during, for instance, a production process.

### <Monomer Contained>

When a flat plate of 120 mm × 100 mm × 3.0 mm in thickness is molded from polymer composition A or polymer composition B in the invention under the following injection conditions of:
(1) using a non-vent-type injection molding machine;
(2) using a cold runner mold;
(3) having a cylinder temperature of 260°C; and
(4) having a ratio of an injection volume of the injection molding machine to a molded product volume of 4.5,
a difference (hereinafter, also referred to as an increase in monomer content) between a monomer content in the flat plate that is formed from the polymer composition and is obtained at a cooling time of 5 min (hereinafter, also referred to as a 5-min cycle) in the mold and a monomer content in the flat plate that is formed from the polymer composition and is obtained at a cooling time of 1 min (hereinafter, also referred to as a 1-min cycle) in the mold is 1000 ppm by mass or more and 12000 ppm by mass or less. Here, the non-vent-type injection molding machine is an injection molding machine in which no vent opening is provided in a cylinder part of the injection molding machine and moisture contained in a polymer composition and volatile gas from a contained monomer, for instance, are not discharged from a vent opening. Examples include an eC130SXII-4A, manufactured by Toshiba Machine Co., Ltd. The cold runner system is a runner system in which a runner is cooled in a mold and taken out together with a molded product. Further, the molded product volume represents the volume of polymer composition per shot of the molded product including sprue and runner parts. The injection volume of the injection molding machine represents the maximum volume of polymer composition charged in a cylinder of the injection molding machine. The ratio of the injection volume of the injection molding machine to the molded product volume of 4.5 means a range from 4.45 to 4.54. The mold-runner system and the ratio of the injection volume of the injection molding machine to the molded product volume affect the thermal history of the polymer composition during molding. In addition, the cylinder temperature of 260°C is a condition in which the heater conditions of the injection molding machine are set, from a heater on the raw material inlet side (hopper) to a heater on the outlet side, to 55°C to 65°C for a heater under the hopper on the raw material inlet side, 220°C to 230°C for a heater beside (downstream of) the heater under the hopper, and 250°C to 260°C for a nozzle heater, and the temperature conditions of the rest heaters are set to 260°C.

It is generally known to those skilled in the art that a low monomer content included in a molded body is advantageous for the physical properties of the molded body. It has been found that if an increase in the monomer content is set within the above range, a molded body having excellent optical characteristics and heat resistance can be obtained.

As used herein, the increase in the monomer content is a value obtained by subtracting a monomer content in the molded body produced by the 1-min cycle from a monomer content in the molded body produced by the 5-min cycle.

As used herein, the cylinder temperature refers to a preset temperature of the extruder. However, the temperature of the polymer composition in the cylinder is usually the same as the preset temperature. Thus, the temperature of the polymer composition may be regarded as the preset temperature of the extruder.

The linear velocity of the polymer composition at the nozzle tip during molding is usually in the range of 3.6 m/s to 14.2 m/s. In addition, the screw rotation speed at the time of weighing during injection molding is usually from 20 rpm to 80 rpm; the gate cross-sectional area of the mold is usually from 20 to 30 mm²; and usually 1 to 2 gate location points are provided.

The monomer contained in the molded body comprising the polymer composition of the invention refers to a raw material monomer that remains in the molded body without being polymerized, and/or a monomer that is included in the molded body because the polymer is decomposed by granulation or heat during injection molding. The monomer content in the molded body may be measured by, for example, gas chromatography.

When the increase in the monomer content is 1000 ppm by mass or more, the value for yellowness of the molded body comprising the polymer composition can be lowered, and at the same time, the total light transmittance of the molded body can be increased. Specifically, the yellowness of the molded body produced by the 5-min cycle using the polymer composition of the invention may be preferably 17.4 or less, more preferably 13.6 or less, still more preferably 12.8 or less, still more preferably 11.1 or less, still more preferably 8.9 or less, still more preferably 7.8 or less, and still more preferably 5.9 or less. At the same time, the total light transmittance of the molded body produced by the 5-min cycle may be preferably 75.1% or higher, more preferably 78.6% or higher, still more preferably 79.0% or higher, still more preferably 80.5% or higher, still more preferably 81.2% or higher, still more preferably 82.0% or higher, and still more preferably 83.6% or higher. Furthermore, the yellowness of the molded body produced by the 1-min cycle using the polymer composition of the invention may be preferably 9.9 or less, more preferably 9.3 or less, still more preferably 8.5 or less, still more preferably 8.1 or less, still more preferably 6.2 or less, still more preferably 5.5 or less, and still more preferably 5.0 or less. At the same time, the total light transmittance of the molded body produced by the 1-min cycle may be preferably 79.6% or higher, more preferably 80.2% or higher, still more preferably 81.0% or higher, still more preferably 83.7% or higher, still more preferably 84.0% or higher, and still more preferably 84.5% or higher. The yellowness and the total light transmittance of the molded body may be measured using, for example, a spectrophotometer.

If the increase in the monomer content is 12000 ppm by mass or less, the molded body comprising the polymer composition can have sufficient heat resistance. Specifically, the Vicat softening temperature of the molded body produced by the 5-min cycle using the polymer composition of the invention may be preferably 107°C or higher and more preferably 108°C or higher. In particular, a decrease in the Vicat softening temperature between the molded body produced by the 5-min cycle and the molded body produced by the 1-min cycle may be preferably 9.7°C or less, more preferably 7.5°C or less, and still more preferably 5.0°C or less. Thus, a marked decrease in heat resistance due to the difference between the cycle times can be prevented. The Vicat softening temperature of the molded body may be measured according to, for example, JIS K7206 (B50 method).

In addition, if the increase in the monomer content is 12000 ppm by mass or less, the yellowness when the molded body is left standing at 120°C for 400 h may be preferably 46.1 or less, more preferably 40.0 or less, still more preferably 30.0 or less, still more preferably 18.5 or less, still more preferably 6.2 or less, and still more preferably 5.5 or less. This makes it possible to give favorable thermal degradation resistance characteristics. The thermal degradation resistance characteristics of the polymer composition are evaluated by yellowness, and may be measured with, for example, a spectrophotometer.

The increase in the monomer content is 1000 ppm by mass or more and 12000 ppm by mass or less, preferably 2000 ppm by mass or more and 11500 ppm by mass or less, more preferably 6000 ppm by mass or more and 11000 ppm by mass or less, still more preferably 7000 ppm by mass or more and 10800 ppm by mass or less, and still more preferably 8000 ppm by mass or more and 10600 ppm by mass or less.

The above increase in the monomer content is affected by various conditions. For instance, the content of the ring-structured monomer unit may be set within the above-mentioned range to adjust the increase in the monomer content to be within the above-mentioned predetermined range. Specifically, as described above, the proportion of the ring-structured monomer unit based on all the monomers contained in the polymer is preferably more than 0.15 mol% and 5 mol% or less, more preferably 0.2 mol% or more and 4.5 mol% or less, still more preferably 0.26 mol% or more and 4 mol% or less, still more preferably 0.3 mol% or more and 3 mol% or less, and still more preferably 0.6 mol% or more and 1 mol% or less. The ring-structured monomer unit in the polymer may be adjusted to be within the above range, thereby increasing the increase in the monomer content and reducing the possibility of being lower than 1000 ppm by mass. The content of the ring-structured monomer unit can be adjusted by changing the proportion (mol% or mass%) of a monomer having a ring structure or a monomer that can form a ring structure in the raw material, changing a temperature during extruding granulation, or adding an accelerator of a ring-structure-forming reaction during extruding granulation.

Further, the amount of the phosphorus-based antioxidant blended may also affect the increase in the monomer content. For example, the upper limit of the amount of the phosphorus-based antioxidant blended is preferably 0.2 parts by mass or less, more preferably 0.15 parts by mass or less, still more preferably 0.1 parts by mass or less, still more preferably 0.09 parts by mass or less, and particularly preferably 0.08 parts by mass or less. The lower limit is preferably 0.005 parts by mass or larger, more preferably 0.01 parts by mass or larger, and still more preferably 0.05 parts by mass or larger. This makes it possible to prevent the increase in the monomer content from becoming large. The increase in the monomer content can be prevented from becoming large, so that excellent heat resistance can be imparted to the resulting molded body. The molded body having better heat resistance is advantageous particularly when used as a raw material for an optical member of an optical lens for a high-brightness LED lamp in which high heat resistance is required.

The value for the melt flow rate (MFR), at 230°C and a load of 3.8 kg, of the polymer composition of the invention may be in the range of preferably 0.1 or more and 10 or less, more preferably 1 or more and 6 or less, still more preferably 2 or more and 5 or less, and still more preferably 2.5 or more and 4 or less. The MFR is set to such a value, so that suitable fluidity is exhibited when the polymer composition is used as a raw material for an optical member such as an optical lens and for example, when the polymer composition is subjected to, for instance, injection molding. As used herein, the MFR value may be measured by the protocol defined in JIS K7210.

The weight-average molecular weight of the polymer contained in the polymer composition of the invention may be in the range of preferably 50,000 or more and 120,000 or less, more preferably 60,000 or more and 100,000 or less, and still more preferably 70,000 or more and 90,000 or less. The weight-average molecular weight may be set to such a value to make favorable the mechanical properties of the molded body comprising the polymer composition of the invention. The weight-average molecular weight of the polymer may be measured by, for example, gel permeation chromatography.

The glass transition temperature (Tg) of the polymer composition of the invention may be in the range of preferably 115 or more and 130 or less and more preferably 120 or more and 126 or less. The water absorption of the polymer composition of the invention may be in the range of preferably 0.1 or more and 0.5 or less and more preferably 0.2 or more and 0.4 or less. The glass transition temperature of the polymer composition of the invention may be measured by, for example, differential scanning calorimetry (DSC) in accordance with JIS K7121, and the water absorption may be measured by the protocol according to JIS K7209.

### <Method for Producing Polymer Composition>

In a method for producing a polymer composition according to the invention, first, two or more different raw material monomers are polymerized, and another component(s) are optionally added to obtain polymer composition A or polymer composition B. The monomer polymerization process is not particularly limited, and for example, a known polymerization process such as suspension polymerization, solution polymerization, or bulk polymerization may be employed. In particular, suspension polymerization may be adopted. The suspension polymerization may be performed by charging, for instance, water, a polymerization initiator, a chain transfer agent, a suspension stabilizer, and optionally another additive(s) in an autoclave, and usually supplying and heating a monomer component under stirring. The amount of water used is usually about 1 to 5 times, particularly about 1 to 3 times the amount of the monomer component in terms of volume ratio.

The polymerization initiator that can be used is not particularly limited, and examples thereof include a known radical polymerization initiator such as lauryl peroxide, a peroxide (e.g., 1,1-di(tert-butylperoxy)cyclohexane), or an azo compound (e.g., azobisisobutyronitrile). One kind or two or more kinds of the polymerization initiator may be used.

The chain transfer agent is not particularly limited, and examples thereof include a mercaptan compound such as n-dodecyl mercaptan (in particular, 1-dodecyl mercaptan), n-butyl mercaptan, n-octyl mercaptan, or 2-ethylhexyl thioglycolate. Only one kind or two or more kinds of the chain transfer agent may be used.

Examples of the suspension stabilizer include water-soluble cellulose ether such as methyl cellulose, hydroxyethyl cellulose, hydroxypropyl cellulose, or hydroxypropyl methyl cellulose. In addition, it is also possible to use a water-soluble polymer such as partially saponified vinyl alcohol, an acrylic acid polymer or gelatin.

During suspension polymerization, for example, a slurry-like reaction product obtained after polymerization is dehydrated, optionally washed, and then dried. After drying, bead-like polymer composition A or polymer composition B is obtained. The bead-like polymer composition A or polymer composition B may be used as it is, or another component(s) as described above may be added. The polymer composition A or the polymer composition B and another component(s) optionally added are further extruded with an extruder (e.g., a degassing extruder), resulting in the polymer composition of the invention in a pellet shape.

More specifically, the polymer composition of the invention is polymer composition A containing a polymer of a monomer having a ring structure, or a polymer composition as a cyclized product of polymer composition B containing a precursor polymer, namely a polymer of two or more different monomers that are capable of together forming a ring. The polymer composition of the invention can be produced by extruding, with an extruder, the polymer composition A or B at a cylinder temperature of usually 200°C or more and less than 280°C, preferably 220°C or more and 275°C or less, and more preferably 240°C or more and 270°C or less. The cylinder temperature may be set within the above range to easily adjust the increase in the monomer content to be within the above-mentioned predetermined range. This can result in a particularly lower value for the yellowness of the molded body comprising the polymer composition. In particular, the cylinder temperature may be set to less than 280°C to reduce the possibility that the increase in the monomer content is lower than 1000 ppm by mass. This can result in a particularly lower value for the yellowness of the molded body comprising the polymer composition and at the same time, the total light transmittance can be made higher.

In addition, the method for producing a polymer composition according to the invention may further include a step of causing the two or more different monomer units that are capable of together forming a ring to be cyclized by extrusion with an extruder when the polymer composition of the invention is produced from the polymer composition B.

As described above, the increase in the monomer content of the molded body produced from the polymer composition of the invention is adjusted to be within the above-mentioned predetermined range. Because of this, the molded body has a particularly low value for the yellowness and has sufficient heat resistance. For example, a larger amount of monomer having a high reaction rate is included as the raw material monomer for a polymerization reaction. This can decrease the monomer content in the 1-min cycle and the 5-min cycle. Further, for example, a polymerization process having a higher monomer polymerization rate, such as suspension polymerization, may be selected. This can decrease the monomer content in the 1-min cycle and the 5-min cycle. In addition, the polymerization conditions may be set such that the polymerization time is shortened and/or the amount of the polymerization initiator added is reduced. This can increase the monomer content in the 1-min cycle and the 5-min cycle.

In the method for producing a polymer composition according to the invention, not only the cylinder temperature of the extruder is preferably set, but also the cycle time in the injection molding machine is preferably set to an appropriate time that is not too long. For example, when the screw rotation speed of the extruder is preferably from 100 rpm or more to 400 rpm and more preferably from 200 rpm or more to 300 rpm, the processing amount is set to preferably 5 kg/h or more and 20 kg/h or less and more preferably 10 kg/h or more and 17 kg/h or less in terms of the amount of composition processed per cycle time in the extruder. Alternatively, for example, the material should not be heated at a high temperature (e.g., about 290°C) for a long time during post-processing. The production conditions may be selected, if appropriate, in this manner to prevent the physical properties from being significantly changed. As a result, the value for the yellowness of the molded body can be lowered, and the molded body should have sufficient heat resistance.

### <Molded Body and Optical Member>

The molded body comprising the polymer composition of the invention can suitably take a shape according to desired usage. The molded body may be produced, for example, by subjecting the polymer composition of the invention to injection filling. Specifically, the polymer composition of the present invention is pelletized as described above, injected from a hopper into a cylinder, and melted while a screw is rotated. Next, the screw is retracted to fill the cylinder with a predetermined amount of the polymer composition. Then, the melt polymer composition is subjected to injection filling into a mold under pressure while the screw is moved forward. After dwelled for a certain period until the mold is cooled sufficiently, the mold is opened. Finally, the resulting molded body is taken out. Various conditions when the molded body is produced (e.g., the melting temperature of the molding material in the cavity, the mold temperature at the time of injecting the molding material into the mold, the pressure at the time of dwelling after filling the mold with the polymer composition) may be set, if appropriate, and are not particularly limited.

An optical member can be produced using a molded body comprising the polymer composition of the invention. Thus, the optical member has a low yellowness value and heat resistance. The optical member means an optical lens, a light guide member, and so on. The optical member means, for instance, an optical lens or a light guide member that can be used for general lighting equipment such as lights of vehicles such as automobiles and motorcycles, streetlights, electric stands, or common household lighting.

### EXAMPLES

The invention will be described more specifically with reference to the following Examples and Comparative Examples. However, the invention is not limited to them.

As used herein, the "methacrylic polymer composition" means a composition containing a polymer produced by polymerizing at least part of one or more monomers selected from the group consisting of methacrylic acid and methacrylate. In addition, protocols for measuring the physical properties of the polymer composition and its test molded piece (molded body) will be described below. Here, the physical properties and the metrics (or physical values and measured values) of those including Examples as described herein are based on the values determined by the following protocols.

### • To Prepare Methacrylic Polymer Composition and Produce Test Molded Piece

### (Example 1)

In a 5-L autoclave equipped with a stirrer, 5 parts by mass of methacrylic acid (hereinafter, referred to as MAA, manufactured by Nippon Shokubai Co., Ltd.) and 95 parts by mass of methyl methacrylate (hereinafter, referred to as MMA, manufactured by Sumitomo Chemical Co., Ltd.) were mixed to prepare a monomer component. Based on 100 parts by mass of the total monomer component, 0.4 parts by mass of lauryl peroxide ("LAUROX K" manufactured by Kayaku Akzo Corporation) as a polymerization initiator and 0.6 parts by mass of 1-dodecyl mercaptan as a chain transfer agent were added to this monomer component, and these were dissolved. Further, based on 100 parts by mass of the total monomer component, 0.060 parts by mass of hydroxyethyl cellulose ("SANHEC H", manufactured by Sansho Co., Ltd.; hereinafter, referred to as HEC) as a suspension stabilizer was dissolved in ion-exchanged water to form a suspension polymerization aqueous phase. Next, 150 parts by mass of aqueous phase based on 100 parts by mass of the total monomer component was added, and suspension polymerization was then carried out. The resulting slurry-like reaction liquid was dehydrated and washed twice with 40 L of ion-exchanged water by using a dehydrator ("Centrifuge H-122", manufactured by KOKUSAN Co., Ltd.), and then dried to yield a bead-like polymer composition. Subsequently, 0.06 parts by mass of a phosphorus-based antioxidant ("Sumilizer GP", manufactured by Sumitomo Chemical Co., Ltd.) based on 100 parts by mass of the polymer composition was blended in this bead-like polymer composition. Thereafter, a twin-screw extruder (model: TEX30SS-30AW-2V), manufactured by Japan Steel Works, Ltd., was used to perform melt-kneading under the following kneading conditions. The resulting material was extruded into a strand shape, cooled with water, and cut with a strand cutter to produce a pellet-shaped methacrylic polymer composition.

### (Kneading Conditions)

Extruder temperature: 240°C (8 heaters from the raw material inlet to the outlet were set to, from the raw material inlet side, 210°C, 220°C, 240°C, 240°C, 240°C, 240°C, 240°C, and 255°C, respectively)
Rotation speed: 250 rpm
Rate of injection of raw material: 10 kg/h

By using a non-vent-type injection molding machine (eC130SXII-4A manufactured by Toshiba Machine Co., Ltd.; nozzle diameter: 3 mm), the resulting pellet-shaped methacrylic polymer composition was molded into a flat plate shape of 120 mm × 100 mm × 3.0 mm in thickness for each sample under the following molding conditions such as a cooling timer of 1 min (i.e., 1-min cycle) or 5 min (i.e., 5-min cycle) to give a test molded piece.

### (Molding Conditions)

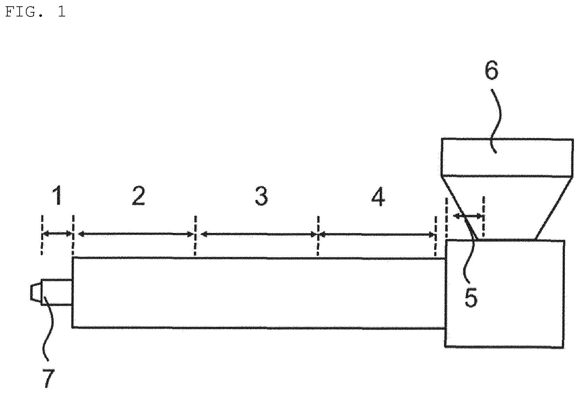

Cylinder temperature: 260°C (as shown in Fig. 1, 5 heaters from the raw material inlet (hopper) to the outlet were set to, from the raw material inlet side, 60°C (a heater under the hopper), 225°C (H3), 260°C (H2), 260°C (H1), and 255°C (a nozzle heater), respectively).

Ratio of the injection volume of the injection molding machine to the molded product volume: 4.5
Screw diameter: 40 mm
Injection rate: 50 mm/s
Linear velocity at the nozzle: 7.1 m/s
Maximum injection pressure: 110 MPa
Dwelling pressure: 60 MPa
Dwelling speed: 20 mm/s
Injection timer: 8 s
Mold temperature: 60°C
Runner system: cold runner
Gate location: 1 point
Gate cross-sectional area: 24 mm² (width 8 mm × height 3 mm)
Cooling timer: condition 1) 60 s; condition 2) 300 s
Screw rotation speed at the time of weighing: 40 rpm
Back pressure: 10%

### (Examples 2 and 3)

A methacrylic polymer composition and test molded pieces produced by the 1-min cycle or the 5-min cycle were obtained in substantially the same manner as in Example 1 except that the amount of the phosphorus-based antioxidant ("Sumilizer GP", manufactured by Sumitomo Chemical Co., Ltd.) blended in the bead-like polymer composition was changed to either 0.08 parts by mass or 0.10 parts by mass.

### (Example 4)

A methacrylic polymer composition and test molded pieces produced by the 1-min cycle or the 5-min cycle were obtained in substantially the same manner as in Example 3 except that the phosphorus-based antioxidant blended in the bead-like polymer composition was changed to a phosphorus-based antioxidant ("Irgafos 168" manufactured by BASF Japan Ltd.).

### (Example 5)

A methacrylic polymer composition and test molded pieces produced by the 1-min cycle or the 5-min cycle were obtained in substantially the same manner as in Example 1 except that MAA and MMA charged and mixed in an autoclave were set to 4 parts by mass and 96 parts by mass, respectively, and a mixing ratio between MAA and MMA was so changed to alter the polymer components of the finally produced methacrylic polymer composition (see Table 1 shown later), and the amount of the phosphorus-based antioxidant ("Sumilizer GP", manufactured by Sumitomo Chemical Co., Ltd.) blended in the bead-like polymer composition was set to 0.05 parts by mass.

### (Examples 6 to 8)

A methacrylic polymer composition and test molded pieces produced by the 1-min cycle or the 5-min cycle were obtained in substantially the same manner as in Example 5 except that the phosphorus-based antioxidant blended in the bead-like polymer composition was changed to a phosphorus-based antioxidant ("Irgafos 168" manufactured by BASF Japan Ltd.) and the amount thereof was either 0.07 parts by mass, 0.15 parts by mass, or 0.03 parts by mass.

### (Comparative Example 1)

A methacrylic polymer composition and test molded pieces produced by the 1-min cycle or the 5-min cycle were obtained in substantially the same manner as in Example 1 except that no phosphorus-based antioxidant was blended in the bead-like polymer composition.

### (Comparative Example 2)

A methacrylic polymer composition and test molded pieces produced by the 1-min cycle or the 5-min cycle were obtained in substantially the same manner as in Example 5 except that the amount of the phosphorus-based antioxidant ("Sumilizer GP", manufactured by Sumitomo Chemical Co., Ltd.) blended in the bead-like polymer composition was changed to 0.30 parts by mass.

### (Comparative Example 3)

A methacrylic polymer composition and test molded pieces produced by the 1-min cycle or the 5-min cycle were obtained in substantially the same manner as in Example 5 except that the amount of the phosphorus-based antioxidant ("Irgafos 168" manufactured by BASF Japan Ltd.) blended in the bead-like polymer composition was changed to 0.25 parts by mass.

### (Comparative Example 4)

A methacrylic polymer composition and test molded pieces produced by the 1-min cycle or the 5-min cycle were obtained in substantially the same manner as in Example 5 except that kneading conditions when a twin screw extruder (model: TEX30SS-30AW-2V), manufactured by The Japan Steel Works, Ltd., was used were set as follows.

Extruder temperature: 280°C (8 heaters from the raw material inlet to the outlet were set to, from the raw material inlet side, 210°C, 220°C, 280°C, 280°C, 280°C, 280°C, 280°C, and 280°C, respectively).

### (Comparative Example 5)

A polymer composition was obtained in substantially the same manner as in Example 6 except that MAA and MMA charged and mixed in an autoclave were set to 90 parts by mass and 10 parts by mass, respectively, and a mixing ratio between the MAA and the MMA was so changed to prepare a bead-like polymer composition, and 25 wt% aqueous sodium hydroxide and 0.05 parts by weight of a phosphorus-based antioxidant ("Sumilizer GP", manufactured by Sumitomo Chemical Co., Ltd.) based on 100 parts by mass of the polymer composition were added thereto. A methacrylic polymer composition and test molded pieces produced by the 1-min cycle or the 5-min cycle were obtained in substantially the same manner as in Example 5 except that the polymer components of the finally produced methacrylic polymer composition were changed (see Table 1 shown later).

### • Analysis and Measurement

### <To Analyze Polymer Components of Methacrylic Polymer Composition>

The polymer components of each methacrylic polymer composition obtained in Examples 1 to 8 or Comparative Examples 1 to 5 were analyzed by ¹³C-NMR measurement with a nuclear magnetic resonance instrument ("Avance 600" (10-mm cryoprobe), manufactured by Bruker Corporation). The measurement was performed by an inverse gate proton decoupling method using deuterated chloroform as a measurement solvent at a measurement temperature of 27°C. The pulse repetition time was set to 20 sec, the number of integrations was set to 4000, and chloroform was used as a chemical shift value standard. The value of MMA was calculated by integrating peaks at 173.0 to 180.4 ppm. The value of MAA was calculated by integrating peaks at 180.4 to 188.0 ppm. The value of a glutaric anhydride structure (hereinafter, also referred to as GAH) formed by cyclocondensation of MMA and MAA was calculated by integrating peaks at 170.0 to 173.0 ppm.

### <To Measure Thermal Degradation Resistance Characteristics of Methacrylic Polymer Composition>

The methacrylic polymer compositions obtained in Examples 1 to 8 or Comparative Examples 1 to 5 were evaluated for thermal degradation resistance characteristics. The resulting pellet-shaped methacrylic polymer compositions were each dried at 80°C for 12 h, and then press-molded using a press molding machine ("Shinto-type ASF hydraulic press", manufactured by Shinto Metal Industries, Ltd.) at a press temperature of 220°C to give a test piece of 50 mm × 50 mm × 3 mm. Next, each of the test pieces obtained was allowed to stand for 400 h in a thermostat (Perfect Oven "PH-101", manufactured by ESPEC CORPORATION) set at a temperature of 120°C. The yellowness of the test piece before or after the test was measured using a spectrophotometer ("Hitachi Spectrophotometer U-4000", manufactured by Hitachi High-Tech Fielding Corporation) at an optical path length of 50 mm.

### <To Measure Total Light Transmittance (Tt) of Test Molded Piece>

The total light transmittance was measured for each of the test molded pieces produced by the 1-min cycle or the 5-min cycle from each methacrylic polymer composition obtained in Examples 1 to 8 or Comparative Examples 1 to 5. The total light transmittance at 380 nm to 780 nm was measured using a spectrophotometer ("Hitachi Spectrophotometer U-4000", manufactured by Hitachi High-Tech Fielding Corporation) at an optical path length of 100 mm.

### <To Measure Yellowness (Yellow Index (YI)) of Test Molded Piece>

The yellowness was measured for each of the test molded pieces produced by the 1-min cycle or the 5-min cycle from each methacrylic polymer composition obtained in Examples 1 to 8 or Comparative Examples 1 to 5. The yellowness at 380 nm to 780 nm was measured using a spectrophotometer ("Hitachi Spectrophotometer U-4000" manufactured by Hitachi High-Tech Fielding Corporation) at an optical path length of 100 mm.

### <To measure Vicat Softening Temperature (VST) of Test Molded Piece>

The Vicat softening temperature was measured for each of the test molded pieces produced by the 1-min cycle or the 5-min cycle from each methacrylic polymer composition obtained in Examples 1 to 8 or Comparative Examples 1 to 5. In accordance with JIS K7206 (B 50 method), the Vicat softening temperature (°C) of each injection-molded piece from each methacrylic polymer composition obtained was measured using a heat distortion tester ("148-6 series model", manufactured by Yasuda Seiki Seisakusho, Ltd.).

### <To Measure Monomer Content of Test Molded Piece>

The monomer content, namely the amount of MMA or MAA monomer was measured for each of the test molded pieces produced by the 1-min cycle or the 5-min cycle from each methacrylic polymer composition obtained in Examples 1 to 8 or Comparative Examples 1 to 5.

### (Sample Adjustment)

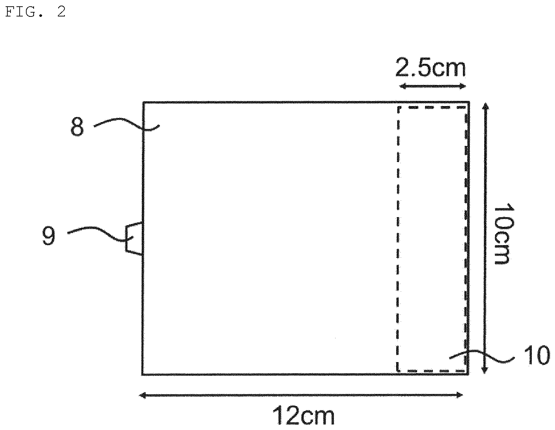

A test molded piece of each polymer composition obtained was cut out into a size of 2.5 cm × 10 cm from a portion opposite to the gate side as shown in Fig. 2. Next, 2.5 g thereof was precisely weighed and 10 cc of acetone (special grade) was added. After complete dissolution, 1 cc of internal standard solution (obtained by dissolving, in methanol, methyl isobutyl ketone (MIBK) in an amount of 1%) was added thereto. Then, the mixture was sufficiently stirred. Further, 30 cc of methanol was added to re-precipitate a copolymer. After that, the supernatant solution was collected.

### (Measurement Conditions)

Apparatus: GC-2010 Plus (manufactured by Shimadzu Corporation)
Column: DB-1 (manufactured by Agilent Technologies, Inc.)
Detector: FID 2010 Plus (manufactured by Shimadzu Corporation)
Column oven conditions (MMA monomer)
Initial temperature: 40°C (hold time: 1 min)
Heating rate: 8°C/min
Intermediate temperature: 120°C (hold time: 0 min)
Heating rate: 20°C/min
Final temperature: 250°C (hold time: 5 min)
Column oven conditions (MAA monomer)
Initial temperature: 80°C (hold time: 3 min)
Heating rate: 10°C/min
Final temperature: 300°C (hold time: 5 min)
Sample vaporization conditions (MMA monomer)
Vaporization chamber temperature: 300°C
Carrier gas: helium
Pressure: 50 kPa
Total flow rate: 58.3 mL/min
Column flow rate: 1.08 mL/min
Linear velocity: 31.1 cm/s
Rate through a purge line: 3.0 mL/min
Split ratio: 50
Sample vaporization conditions (MAA monomer)
Vaporization chamber temperature: 300°C
Carrier gas: helium
Pressure: 64 Kpa
Total flow rate: 124.3 mL/min
Column flow rate: 1.20 mL/min
Linear velocity: 36.6 cm/s
Rate through a purge line: 3.0 mL/min
Split ratio: 100
Detector conditions
Detector temperature: 300°C
Sampling rate: 40 ms
Make-up gas: N₂
Make-up flow rate: 30 mL/min
H2 flow rate: 40 mL/min
Air flow rate: 400 mL/min
Autosampler conditions
Injection volume: 1 µL

The above conditions were used to measure the peak area (a1) corresponding to the MMA or MAA monomer and the peak area (b1) corresponding to MIBK as detected when each polymer composition was measured. Then, the peak area ratio A (= a1/b1) was determined from these peak areas.

Meanwhile, a standard, in which a weight ratio of MIBK to the MMA or MAA monomer was W0 (known), was measured under the above conditions to detect and measure the peak area (a0) corresponding to the MMA or MAA monomer and the peak area (b0) corresponding to MIBK. Then, the peak area ratio A0 (= a0/b0) was determined from these peak areas.

Subsequently, from the peak area ratio A0 and the weight ratio W0, the factor f (= W0/A0) was calculated for each of the MMA or MAA monomer.

Next, the above peak area ratio A was multiplied by the factor f to calculate the weight ratio W of the MMA or MAA monomer contained in the polymer composition as measured with respect to MIBK. Finally, this weight ratio W and the weight of each injection molded piece from each polymer composition used for the analysis were used to calculate each of the MMA or MAA monomer proportion (ppm).

Table 1 below shows the results of analyzing the polymer components, the results of evaluating the thermal degradation resistance characteristic, and the results of measuring each test molded piece of each polymer composition obtained in Examples 1 to 8 or Comparative Examples 1 to 5. Table 1 further shows values obtained by subtracting the physical property value of each test molded piece produced by the 1-min cycle from the physical property value of the corresponding test molded piece produced by the 5-min cycle, and differences between the monomer content in each test molded piece produced by the 5-min cycle and the monomer content in the corresponding test molded piece produced by the 1-min cycle.

**[Table 1]**

| | Components of methacrylic polymer MMA/MAA/GAH (mol%) | Phosphorus-based antioxidant as an additive in the polymer composition (parts by mass based on the polymer composition) | Preset cylinder temperature during granulation in an extruder | Physical property of the polymer composition (thermal degradation resistance characteristic) | Physical properties of test molded pieces of the polymer composition | | | | | | | | | | |
|---|---|---|---|---|---|---|---|---|---|---|---|---|---|---|---|
| | | | | | 1-min cycle | | | | 5-min cycle | | | | Δ (5-min cycle -1-min cycle) | | |
| | | | | | Tt | Yl | VST | Amount of residual monomer | Tt | Yl | VST | Amount of residual monomer | Yl | VST | Amount of residual monomer |
| | | | °C | Yl (120°C, 400 h) | % | - | °C | ppm by mass | % | - | °C | ppm by mass | - | °C | ppm by mass |
| Example 1 | 92.8/6.2/1.0 | Sumilizer GP (0.06 parts by mass) | 240 | 14.8 | 80.2 | 9.3 | 113.9 | 4300 | 78.6 | 13.6 | 110.8 | 6400 | 4.3 | -3.1 | 2100 |
| Example 2 | 92.8/6.2/1.0 | Sumilizer GP (0.08 parts by mass) | 240 | 16.0 | 81.1 | 8.1 | 113.8 | 4500 | 80.5 | 11.1 | 110.8 | 6600 | 3.0 | -3 | 2100 |
| Example 3 | 92.8/6.2/1.0 | Sumilizer GP (0.10 parts by mass) | 240 | 18.5 | 80.5 | 7.6 | 115.2 | 4400 | 80.1 | 8.1 | 110.5 | 9000 | 0.5 | -4.7 | 4600 |
| Example 4 | 92.8/6.2/1.0 | Irgafos 168 (0.10 parts by mass) | 240 | 6.1 | 82.6 | 6.2 | 114.3 | 5900 | 80.9 | 8.1 | 109.2 | 13000 | 1.9 | -5.1 | 7100 |
| Example 5 | 94.2/5.2/0.6 | Sumilizer GP (0.05 parts by mass) | 240 | 16.9 | 81 | 8.5 | 113.7 | 7150 | 79.0 | 12.8 | 111.4 | 10710 | 4.3 | -2.3 | 3560 |
| Example 6 | 94.2/5.2/0.6 | Irgafos 168 (0.07 parts by mass) | 240 | 5.5 | 84 | 5.5 | 113.0 | 7520 | 82.0 | 7.8 | 108.0 | 17820 | 2.3 | -5 | 10300 |
| Example 7 | 94.2/5.2/0.6 | Irgafos 168 (0.15 parts by mass) | 240 | 6.2 | 84.5 | 5.0 | 113.1 | 7120 | 83.6 | 5.9 | 108.1 | 17660 | 0.9 | -5 | 10540 |
| Example 8 | 94.2/5.2/0.6 | Irgafos 168 (0.03 parts by mass) | 240 | 5.2 | 83.7 | 6.2 | 113.6 | 7900 | 81.2 | 8.9 | 109.9 | 14260 | 2.7 | -3.7 | 6360 |
| Comparative Example 1 | 92.8/6.2/1.0 | - | 240 | 10.0 | 76.7 | 15.9 | 114.6 | 4750 | 74.2 | 22.5 | 112.6 | 5350 | 6.6 | -2 | 600 |
| Comparative Example 2 | 94.2/5.2/0.6 | Sumilizer GP (0.30 parts by mass) | 240 | 46.2 | 84.3 | 6.8 | 115.8 | 3100 | 83.8 | 7.2 | 106.0 | 19600 | 0.4 | -9.8 | 16500 |
| Comparative Example 3 | 94.2/5.2/0.6 | Irgafos 168 (0.25 parts by mass) | 240 | 12.0 | 85.7 | 3.9 | 113.8 | 6890 | 86.6 | 4.1 | 106.3 | 19900 | 0.2 | -7.5 | 13010 |
| Comparative Example 4 | 94.2/5.0/0.8 | Sumilizer GP (0.05 parts by mass) | 280 | 16.0 | 79.5 | 10.0 | 112.9 | 8820 | 75.0 | 17.5 | 111.8 | 9850 | 7.5 | -1.1 | 700 |
| Comparative Example 5 | 93/0.8/6.2 | Sumilizer GP (0.05 parts by mass) | 240 | 15.5 | 72.3 | 23.9 | 119.2 | 600 | 73.1 | 22.8 | 118.8 | 930 | -1.1 | -0.4 | 330 |

As can be seen from Table 1 above, in Examples 1 to 8 in which the increase in the monomer content is in the range from 1000 ppm to 12000 ppm, the yellowness of each of the molded body produced by the 1-min cycle or the molded body produced by the 5-min cycle is suppressed. Thus, sufficient heat resistance has been found to be exhibited. By contrast, in Comparative Example 1, Comparative Example 4, and Comparative Example 5 in which the increase in the monomer content is 1000 ppm or less, the yellowness is high and sufficient transparency is not exhibited. In addition, in Comparative Examples 2 and 3 in which the increase in the monomer content is 12000 ppm or more, the Vicat softening point of the molded body molded by the 5-min cycle is low. Thus, neither the heat resistance nor the thermal degradation resistance characteristic is sufficient.

### INDUSTRIAL APPLICABILITY

The molded body comprising the polymer composition of the invention has low yellowness and high heat resistance. Therefore, the molded body can be suitably used as an optical lens or a light guide member, for example, for general lighting equipment such as lights of vehicles such as automobiles and motorcycles, streetlights, electric stands, or common household lighting.

### DESCRIPTION OF REFERENCE SIGNS

- 1: Nozzle heater
- 2: H1 heater
- 3: H2 heater
- 4: H3 heater
- 5: Heater under a hopper
- 6: Hopper
- 7: Nozzle
- 8: Test molded piece
- 9: Gate
- 10: Cut-out portion

## Claims

1. A polymer composition comprising a polymer containing a monomer unit having a ring structure,
wherein the polymer composition is polymer composition A containing a polymer of a monomer having a ring structure, or a polymer composition as a cyclized product of polymer composition B containing a precursor polymer, namely a polymer of two or more different monomers that are capable of together forming a ring, and
when a flat plate of 120 mm × 100 mm × 3.0 mm in thickness is molded from the polymer composition under the following injection molding conditions of:
(1) using a non-vent-type injection molding machine;
(2) using a cold runner mold;
(3) having a cylinder temperature of 260°C; and
(4) having a ratio of an injection volume of the injection molding machine to a molded product volume of 4.5,
a difference between a monomer content in the flat plate obtained at a cooling time of 5 min and a monomer content in the flat plate obtained at a cooling time of 1 min is 1000 ppm by mass or more and 12000 ppm by mass or less.

2. The polymer composition according to claim 1, wherein the monomer unit having a ring structure comprises at least one unit selected from the group consisting of glutaric anhydride structural units, maleic anhydride structural units, maleimide structural units, glutarimide structural units, and lactone structural units.

3. The polymer composition according to claim 2, wherein the monomer unit having a ring structure comprises a glutaric anhydride structural unit.

4. The polymer composition according to any one of claims 1 to 3, further comprising a phosphorus-based antioxidant having a content of 0.005 parts by mass or more and 0.2 parts by mass or less based on 100 parts by mass of the polymer.

5. The polymer composition according to any one of claims 1 to 4, wherein the polymer comprises, as a monomer unit other than the monomer unit having a ring structure, at least one unit selected from the group consisting of methacrylic acid-derived monomer units, methacrylate-derived monomer units, acrylic acid-derived monomer units, and acrylate-derived monomer units.

6. The polymer composition according to any one of claims 1 to 5, wherein the polymer comprises the monomer unit having a ring structure in an amount of more than 0.15 mol% and 5 mol% or less based on all monomer units included in the polymer.

7. A molded body comprising the polymer composition according to any one of claims 1 to 6.

8. An optical member comprising the molded body according to claim 7.

9. A method for producing the polymer composition including a polymer containing a monomer unit having a ring structure according to any one of claims 1 to 6, the method comprising the step of:
producing the polymer composition by extruding, using an extruder at a cylinder temperature of 240°C or higher and 270°C or lower, polymer composition A containing a polymer of a monomer having a ring structure, or polymer composition B containing a precursor polymer, namely a polymer of two or more different monomers that are capable of together forming a ring.

10. The method according to claim 9, wherein the extrusion results in a cyclized product of the polymer composition B containing a precursor polymer, namely a polymer of two or more different monomers that are capable of together forming a ring.
